# FASCICULE DE BREVET EUROPEEN

(11) **EP 0 911 216 B1**
(45) Date de publication et mention de la délivrance du brevet: **02.04.2003**
(21) Numéro de dépôt: 98402554.4
(22) Date de dépôt: 14.10.1998
(51) Int. Cl.: B60Q 1/14

(54) **Système d'allumage automatique des feux d'un véhicule automobile**
Automatische Steuerung des Einschaltens der Kfz-Leuchten
Automatic control of the switching-on of vehicle lights

(30) Priorité: 15.10.1997 FR 9712911
(43) Date de publication de la demande: 28.04.1999
(73) Titulaire: AUTOMOBILES PEUGEOT, 75116 Paris (FR); AUTOMOBILES CITROEN, 92200 Neuilly-sur-Seine (FR)
(72) Inventeur: Loth, Siri Yuth, 95350 Saint Brice Sous Forêt (FR)
(74) Mandataire: Habasque, Etienne Joel Jean-François

(56) Documents cités:
- DE-A- 19 523 262
- FR-A- 2 315 820
- GB-A- 2 295 891
- US-A- 2 944 188

## Description

La présente invention concerne un système d'allumage automatique des feux d'un véhicule automobile.

On connaît déjà dans l'état de la technique, des systèmes d'allumage automatique de ce type, dont certains comportent deux capteurs de lumière dans l'environnement du véhicule, décalés angulairement l'un par rapport à l'autre, et des moyens de traitement des signaux de sortie de ces capteurs pour contrôler le fonctionnement de moyens de commande de l'allumage et de l'extinction des feux du véhicule.

C'est ainsi par exemple que l'on connaît dans l'état de la technique, un système qui utilise deux photorésistances en tant que capteurs, ces photorésistances étant disposées horizontalement et dirigées l'une vers l'avant et l'autre vers l'arrière du véhicule.

Cependant, de tels systèmes présentent un certain nombre d'inconvénients, notamment au niveau de leur temps de réaction par exemple au passage du véhicule dans un tunnel routier.

En effet, la photorésistance placée horizontalement et orientée vers l'arrière du véhicule, reçoit de la lumière jusqu'à ce que le véhicule soit engagé suffisamment profondément dans ce tunnel pour pouvoir déclencher l'allumage des feux.

On conçoit alors que l'allumage des feux est décalé par rapport à l'entrée du véhicule par exemple dans le tunnel, ce qui peut être gênant.

D'autres systèmes développés dans l'état de la technique n'utilisent qu'un seul capteur de type photodiode par exemple, orienté verticalement vers le ciel au-dessus du véhicule.

Pour résoudre des problèmes d'allumage intempestif des feux du véhicule liés à l'utilisation d'un seul capteur, on intègre dans ces systèmes des moyens de retard à allumage des feux.

On conçoit également que ceci pénalise le temps de réaction du système au passage dans un tunnel et qu'un tel système devient inefficace si le véhicule roule très lentement ou s'arrête sous un pont, une passerelle, un arbre, etc.

Le but de l'invention est donc de résoudre ces problèmes.

A cet effet, l'invention a pour objet un système d'allumage automatique des feux d'un véhicule automobile, du type comportant au moins deux capteurs de lumière dans l'environnement du véhicule, décalés angulairement l'un par rapport à l'autre, et des moyens de traitement des signaux de sortie de ces capteurs pour contrôler le fonctionnement de moyens de commande de l'allumage et de l'extinction des feux du véhicule, caractérisé en ce que les moyens de traitement comprennent des premiers moyens d'analyse des niveaux des composantes de signal continu dans les sorties des capteurs pour analyser le niveau de lumière naturelle dans l'environnement du véhicule et délivrer un ordre d'allumage/extinction des feux en fonction de celui-ci et des seconds moyens d'analyse par détection de la présence de composantes de signal périodique dans les sorties des capteurs pour détecter la présence ou non de lumière artificielle dans l'environnement du véhicule et délivrer en conséquence un ordre d'allumage/extinction des feux du véhicule, et en ce que les premiers moyens d'analyse sont associés à des troisièmes moyens d'analyse différentielle des sorties des capteurs pour détecter un ciel sombre dans l'environnement du véhicule et délivrer une information de temporisation de l'allumage des feux du véhicule à la suite d'un ordre émanant des premiers moyens d'analyse.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant la structure générale d'un système d'allumage automatique des feux d'un véhicule, selon l'invention;
- la Fig.2 illustre l'implantation de capteurs de lumière entrant dans la constitution d'un système selon l'invention, dans un véhicule automobile;
- la Fig.3 représente un organigramme illustrant le fonctionnement d'un système selon l'invention; et
- la Fig.4 représente un schéma électrique d'un exemple de réalisation d'un tel système.

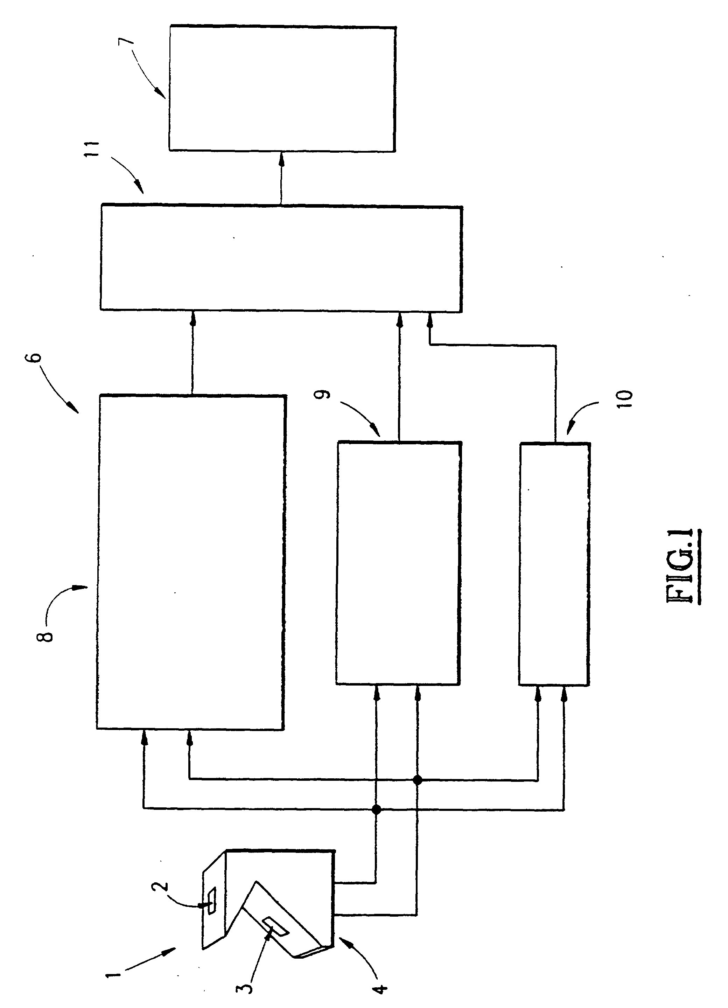

On reconnaît en effet sur la figure 1, un système d'allumage automatique des feux d'un véhicule automobile.

Un tel système comporte de façon classique des moyens de détection de lumière comportant au moins deux capteurs de lumière dans l'environnement du véhicule.

Ces moyens sont désignés par la référence générale 1 sur cette figure 1 et comportent en effet deux capteurs de lumière désignés par les références générales 2 et 3 sur cette figure 1, disposés sur un support commun par exemple 4, dans l'habitacle du véhicule.

Ces capteurs comprennent par exemple des photodiodes et l'un de ceux-ci, par exemple 2, est dirigé vers la partie supérieure du véhicule, tandis que le second, par exemple 3, est dirigé vers la partie avant ou arrière de celui-ci.

Ces capteurs sont par exemple disposés au-dessus de la planche de bord du véhicule et peuvent par exemple être associés au rétroviseur intérieur de ce véhicule.

Avantageusement, le premier capteur 2 dirigé vers la partie supérieure du véhicule, présente un axe vertical et le second, dirigé vers l'avant ou vers l'arrière du véhicule, présente un axe faisant un angle compris entre environ 45° et environ 90° avec celui-ci.

Bien entendu, d'autres dispositions de ces capteurs peuvent être envisagées.

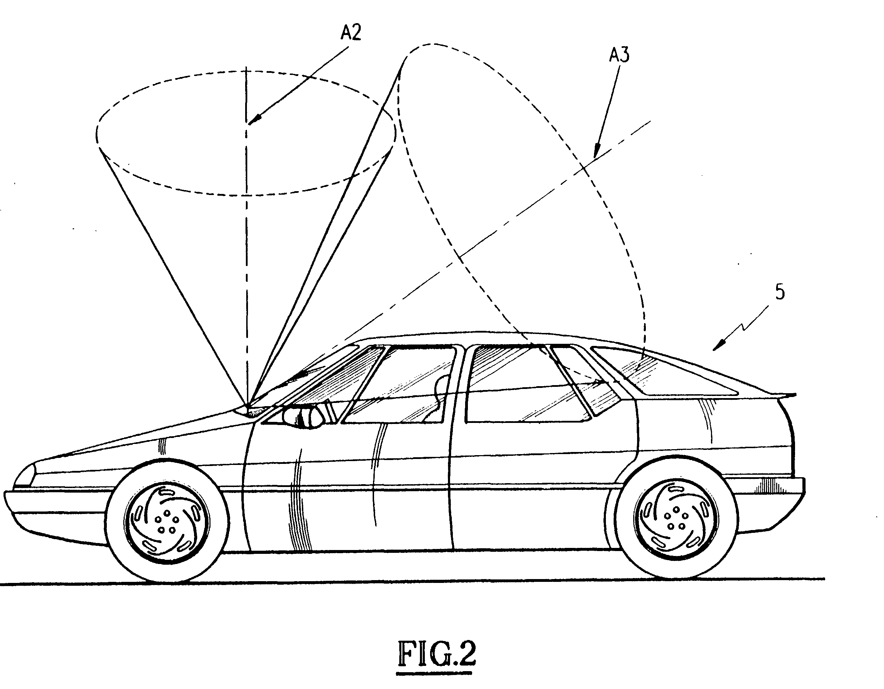

On a illustré sur la figure 2, un exemple d'implantation de ces capteurs dans un véhicule désigné par la référence générale 5 sur cette figure. Dans le cas illustré, le capteur désigné par la référence générale 3 est dirigé vers l'arrière du véhicule.

On conçoit alors que les cônes de détection de ces capteurs peuvent par exemple présenter un angle d'ouverture de 60°, et des axes A2 et A3 respectivement dirigés l'un vers le ciel et l'autre vers l'arrière du véhicule, de manière que le premier capteur 2 puisse recevoir de la lumière à travers le pare-brise du véhicule et le second 3, à travers la lunette arrière et les vitres latérales de celui-ci.

Si l'on se réfère à nouveau à la figure 1, on peut constater que la sortie de ces capteurs 2 et 3 est reliée à des moyens 6 de traitement des signaux de sortie de ceux-ci pour contrôler le fonctionnement de moyens de commande 7 de l'allumage et de l'extinction des feux du véhicule.

Ces moyens de traitement 6 comprennent des premiers moyens de traitement analogique de lumière naturelle, désignés par la référence générale 8, qui comprennent en fait des premiers moyens d'analyse des niveaux des composantes de signal continu dans les sorties des capteurs pour analyser le niveau de lumière naturelle dans l'environnement du véhicule et délivrer un ordre d'allumage/extinction des feux du véhicule en fonction de celui-ci.

On sait en effet que la lumière naturelle est stable et sans modulation. Il est alors possible de piloter simplement l'allumage/extinction des feux du véhicule en fonction de la quantité de lumière reçue par les capteurs.

Par ailleurs, les moyens de traitement 6 comprennent également des moyens 9 de traitement analogique de lumière artificielle.

En fait, ces moyens 9 comprennent par exemple des seconds moyens d'analyse par détection de la présence de composantes de signal périodique dans les sorties des capteurs pour détecter la présence ou non de lumière artificielle dans l'environnement du véhicule et délivrer en conséquence un ordre d'allumage/extinction des feux du véhicule.

On sait en effet que par exemple dans des tunnels ou dans des parkings, il est fréquemment disposé des systèmes d'éclairage artificiel dont la lumière est modulée avec une fréquence comprise entre 50 et 100 Hertz par exemple.

Cette modulation de lumière n'est pas perceptible à l'oeil humain, mais peut être détectée par les capteurs 2 et 3 du système.

La détection et le traitement de cette modulation, par les moyens correspondants 9, permettent également de piloter l'allumage/extinction des feux du véhicule.

Enfin, les premiers moyens d'analyse 8 peuvent également être associés à des troisièmes moyens d'analyse différentielle des sorties des capteurs.

Ces moyens sont désignés par la référence générale 10 sur cette figure 1 et constituent des moyens de détection de ciel sombre.

En effet, ces troisièmes moyens 10 d'analyse différentielle des sorties des capteurs permettent de détecter un ciel sombre dans l'environnement du véhicule pour délivrer une information de temporisation de l'allumage des feux du véhicule à la suite d'un ordre d'allumage émanant des premiers moyens d'analyse 8.

On sait en effet que lorsqu'un véhicule circule dans un environnement nuageux, pluvieux ou l'approche du lever ou du coucher du soleil, la quantité de lumière dans l'environnement est très proche du seuil de détection des capteurs, ce qui peut provoquer un allumage ou une extinction intempestif des feux du véhicule par exemple sous un pont, un arbre, dans l'ombre d'un immeuble, etc.

En effet, la présence d'un ciel sombre dans l'environnement du véhicule engendre une différence de potentiel entre les sorties des capteurs 2 et 3 du fait de leur décalage angulaire.

Les troisièmes moyens d'analyse 10 de détection de ce ciel sombre, permettent alors de mémoriser une telle information de ciel sombre pour engendrer un retard à l'allumage des feux à chaque passage dans un tel environnement pour éviter ainsi un allumage des feux intempestif.

La remise à zéro de cette information de ciel sombre est effectuée à chaque allumage des feux et ce cycle continu jusqu'à l'éclaircissement du ciel.

Enfin, les moyens de traitement comprennent également une logique de traitement désignée par la référence générale 11 sur cette figure 1.

Cette logique de traitement permet de gérer les informations provenant des différents moyens de traitement décrits précédemment afin de donner un ordre précis d'allumage ou d'extinction des feux du véhicule aux moyens de commande 7.

Cette logique contient également deux mémoires dont l'une est associée à l'allumage des feux et l'autre, au ciel sombre et des moyens de temporisation, c'est-à-dire de retard à l'allumage/extinction des feux comme cela sera décrit plus en détail par la suite.

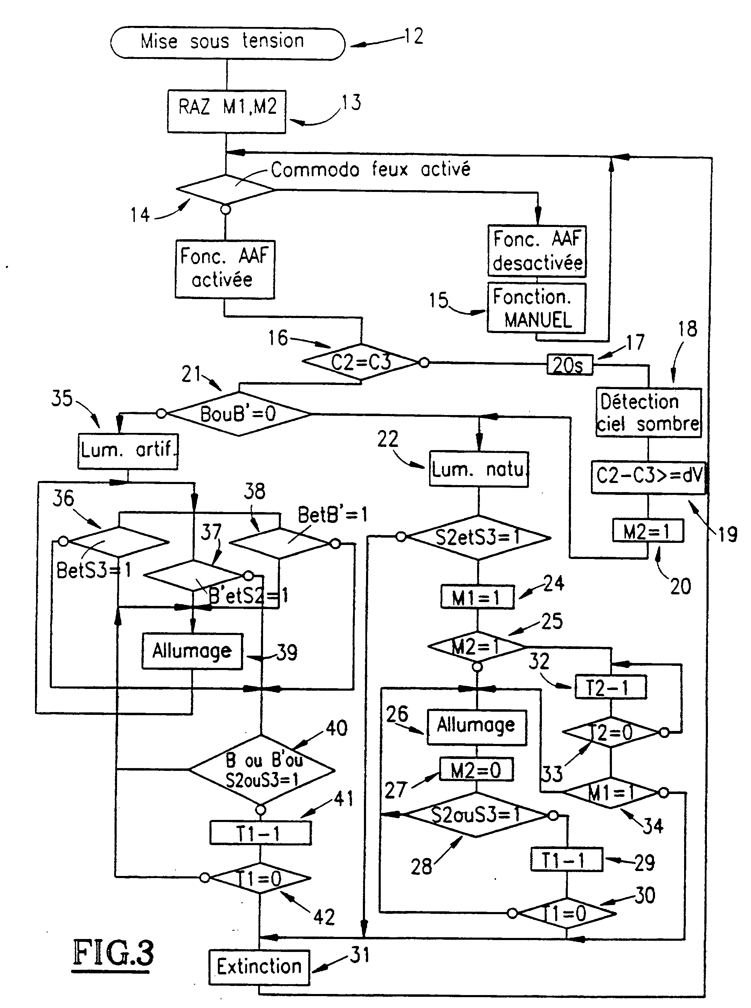

Le fonctionnement d'un tel système est illustré par l'organigramme de la figure 3.

Dans la suite de la description, les références suivantes ont été utilisées :
- C2 et C3 : informations analogiques de niveaux de composantes de signal continu dans les sorties des capteurs 2 et 3 issues des premiers moyens d'analyse 8,
- S2 et S3 : informations de détection de zone sombre issues des capteurs 2 et 3,
- B et B': informations de détection de lumière artificielle des capteurs 2 et 3 issues des seconds moyens d'analyse 9,
- M1, M2 : mémoires d'informations d'allumage des feux et de détection de ciel sombre respectivement,
- T1, T2 : temporisations.

Cet organigramme de la figure 3 débute par des étapes d'initialisation 12 de mise sous tension du véhicule et donc du système et 13 de remise à zéro des mémoires M1 et M2 mentionnées précédemment et concernant l'allumage des feux et le ciel sombre.

Ensuite, en 14, on détermine si le commodo de contrôle du fonctionnement des feux du véhicule est activé ou non.

Si ce n'est pas le cas, la fonction d'allumage automatique des feux AAF est activée, tandis que si c'est le cas, la fonction d'allumage automatique des feux AAF est désactivée, ce qui permet une commande manuelle des feux du véhicule en 15.

Si la fonction d'allumage automatique des feux du véhicule est activée, on compare lors de l'étape 16, les informations analogiques C2 et C3 issues des capteurs 2 et 3 pour comparer les niveaux des composantes de signal continu dans les sorties de ces capteurs afin d'analyser le niveau de lumière naturelle dans l'environnement du véhicule.

Si ces deux niveaux sont différents, après une temporisation par exemple de 20 secondes en 17, on passe lors de l'étape 18, à une détection de ciel sombre en déterminant en 19, si la différence de potentiel C2-C3 entre les sorties des capteurs 2 et 3 est supérieure à un seuil prédéterminé par exemple dV. Si c'est le cas, on mémorise en 20, une information de ciel sombre en plaçant la mémoire M2 à l'état 1.

Si la réponse au test en 16 est positive, indiquant que les niveaux C2 et C3 issus des capteurs 2 et 3 sont égaux, on passe en 21 à un autre test pour déterminer si l'un des capteurs 2 ou 3 détecte la présence d'une lumière artificielle dans l'environnement du véhicule.

Si la sortie B ou B' de l'un ou de l'autre de ces capteurs est à O, c'est à dire qu'il ne détecte pas de lumière artificielle, on passe à l'étape 22 de traitement de la lumière naturelle en déterminant lors de l'étape 23, si les sorties S2 et S3 des capteurs 2 et 3 détectent une zone sombre.

Si c'est le cas, on place la mémoire M1 d'allumage des feux du véhicule, à l'état 1, pour stocker une information de commande de cet allumage lors de l'étape 24.

Ensuite, on analyse en 25, l'état de la mémoire M2 de détection de ciel sombre pour commander lors de l'étape 26, l'allumage des feux du véhicule, si cette mémoire M2 n'est pas activée.

Cette mémoire M2 est ensuite réinitialisée à O lors de l'étape 27.

Puis, lors de l'étape 28, on surveille l'état des sorties S2 et S3 des capteurs 2 et 3, pour maintenir les feux du véhicule allumés tant que l'un ou l'autre de ces capteurs détecte une zone sombre.

Si la réponse au test en 28 est négative, on décrémente une première temporisation T1 lors des étapes 29 et 30 pour maintenir l'allumage des feux pendant une période de temps prédéterminée avant de commander l'extinction des feux du véhicule lors de l'étape 31, à l'expiration de cette temporisation.

Si la réponse au test en 25 est positive, c'est à dire si la mémoire M2 est activée pour indiquer la présence d'un ciel sombre, on décrémente lors des étapes 32 et 33, une seconde temporisation T2 avant de commander l'allumage des feux du véhicule après analyse de l'état de la mémoire M1 lors de l'étape 34.

Si cette mémoire M1 est activée, on provoque l'allumage des feux du véhicule lors de l'étape 26, tandis que si cette mémoire M1 n'est pas activée, on est renvoyé à l'étape 31 d'extinction des feux.

On conçoit alors que cette structure permet grâce aux troisièmes moyens d'analyse différentielle des sorties des capteurs, de détecter un ciel sombre dans l'environnement du véhicule, pour délivrer une information de temporisation de l'allumage/extinction des feux du véhicule à la suite d'un ordre émanant des premiers moyens d'analyse.

Si la réponse au test en 21 est négative, on passe alors au traitement d'une lumière artificielle lors de l'étape 35. Après cette étape, différents tests sont effectués, par exemple en 36,37 et 38 pour analyser l'état des sorties des capteurs 2 et 3, c'est-à-dire les informations de détection de lumière artificielle et de détection de zone sombre de ces capteurs 2 et 3, afin de déclencher lors des détections correspondantes, l'allumage des feux du véhicule en 39.

Si la réponse à ces différents tests en 36,37 et 38 est négative, on passe à un autre test en 40 pour déterminer si l'une des sorties est activée pour revenir à l'étape 39 d'allumage des feux du véhicule.

Si ce n'est pas le cas, on décrémente lors des étapes 41 et 42, la temporisation T1 d'allumage/extinction des feux pour provoquer l'extinction des feux en 31 à la suite de l'expiration de cette temporisation.

On conçoit alors que ceci permet de piloter le fonctionnement des feux du véhicule, lors de la détection de lumière artificielle dans l'environnement du véhicule.

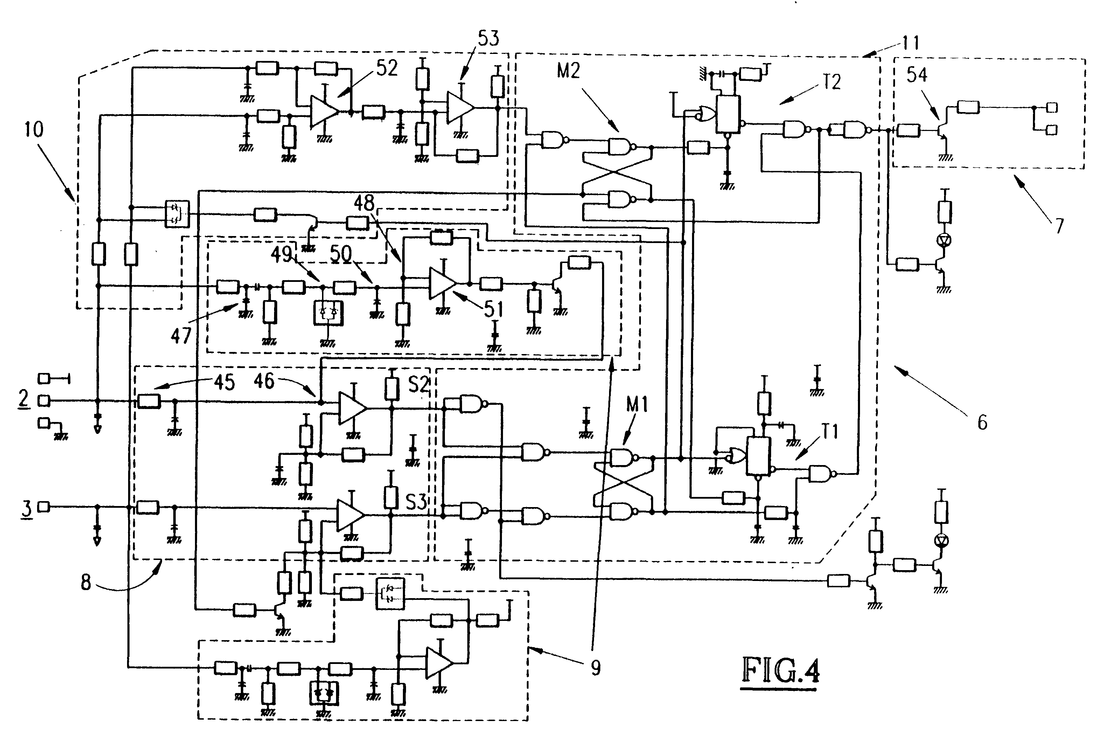

Il va de soi bien entendu qu'un tel fonctionnement peut être mis en oeuvre sous la conduite d'un programme stocké par exemple dans un module à microprocesseur du système, constituant la logique 11 décrite en regard de la figure 1. Par ailleurs, une réalisation par composants discrets d'un tel système peut être envisagée comme cela est illustré sur la figure 4.

On reconnaît en effet sur cette figure 4, les sorties des capteurs 2 et 3 qui sont raccordées aux moyens de traitement 8 de lumière naturelle.

La sortie de chaque capteur passe alors à travers des moyens de filtrage désignés par la référence générale 45 pour le capteur 2 et des moyens de comparaison à hystérésis du signal filtré à un seuil prédéterminé, désignés par la référence générale 46 pour le capteur 2, afin de délivrer un signal S2 indicatif du résultat de la comparaison pour constituer l'ordre d'allumage/extinction des feux du véhicule en fonction du niveau de lumière naturelle.

La branche de circuit correspondant au capteur 3 étant identique, on ne la décrira pas plus en détail par la suite et on notera simplement qu'elle délivre un signal S3 équivalent au signal S2.

Ces signaux sont ensuite traités par exemple par comparaison dans la logique 11 et plus particulièrement en entrée de la mémoire M1, de façon classique pour la commande des moyens d'allumage/extinction des feux du véhicule, lorsque les deux signaux sont identiques.

Les moyens de traitement de lumière artificielle 9 comportent quant à eux deux portions associées chacune à l'un des capteurs.

En fait, ces seconds moyens d'analyse de lumière artificielle comprennent pour chaque capteur, comme par exemple pour le capteur 2, des moyens de découplage de la composante de signal continu du signal de sortie de chaque capteur, ces moyens étant désignés par la référence générale 47 sur cette figure 4 pour le capteur 2, et des moyens de mise en forme du signal de sortie de ces moyens de découplage, désignés par la référence générale 48 sur cette figure, ces moyens de mise en forme de signal comprenant des moyens d'écrétage 49, des moyens de filtrage 50 et des moyens d'amplification de signal 51.

Les troisièmes moyens d'analyse de ciel sombre désignés par la référence générale 10 comprennent quant à eux des moyens d'amplification différentielle recevant en entrée, les signaux de sortie des capteurs, ces moyens d'amplification différentielle étant désignés par la référence générale 52 sur cette figure 4, et des moyens de comparaison de la sortie de ces moyens d'amplification différentielle à un seuil prédéterminé, pour délivrer ou non l'information de temporisation en fonction du résultat de cette comparaison.

Ces moyens de comparaison sont désignés par la référence générale 53 sur cette figure 4.

La logique de traitement 11 comprend quant à elle les mémoires M1 et M2 décrites précédemment et les temporisations T1 et T2 décrites précédemment.

Dans cette figure 4, chaque moyen de mémorisation M1 et M2 comporte deux bascules RS constituées chacune de deux portes NAND, la mémoire M1 étant utilisée pour stocker à partir des informations S2 et S3, une information d'allumage et de maintien de l'allumage des feux du véhicule et la mémoire M2 étant utilisée pour assurer la mémorisation de la détection de ciel sombre.

Les temporisations sont quant à elles constituées par deux monostables. La temporisation T1 est utilisée pour retarder l'extinction des feux à la sortie d'un tunnel par exemple et la temporisation T2 étant utilisée pour retarder l'allumage des feux si une information de ciel sombre est mémorisée.

Enfin, les moyens de commande de l'allumage des feux du véhicule désignés par la référence générale 7 comportent un organe commutateur à semi-conducteur commandé par ces moyens, cet organe comportant par exemple un transistor désigné par la référence générale 54 sur cette figure 4.

Il va de soi bien entendu que différents modes de réalisation d'un tel système peuvent être envisagés et que celui-ci peut être réalisé soit en composants discrets comme cela a été décrit en regard de cette figure 4, soit sous forme programmée par exemple dans une structure à microprocesseur.

Les différents moyens de filtrage, d'écrétage, de comparaison, etc... qui viennent d'être décrits, peuvent être réalisés de façon classique, en utilisant des résistances, des condensateurs, des transistors, des portes et des amplificateurs opérationnels.

On conçoit alors que le système selon l'invention présente un certain nombre d'avantages par rapport aux systèmes de l'état de la technique dans la mesure où il permet de piloter avec précision l'allumage et l'extinction des feux d'un véhicule automobile, en analysant l'environnement dans lequel se déplace le véhicule, pour éviter toute commande intempestive de ces feux.

## Revendications

1. Système d'allumage automatique des feux d'un véhicule automobile, du type comportant au moins deux capteurs de lumière (2,3) dans l'environnement du véhicule, décalés angulairement l'un par rapport à l'autre, et des moyens (6) de traitement des signaux de sortie de ces capteurs pour contrôler le fonctionnement de moyens (7) de commande de l'allumage et de l'extinction des feux du véhicule, **caractérisé en ce que** les moyens de traitement (6) comprennent des premiers moyens (8) d'analyse des niveaux des composantes de signal continu dans les sorties des capteurs (2,3) pour analyser le niveau de lumière naturelle dans l'environnement du véhicule et délivrer un ordre d'allumage/extinction des feux en fonction de celui-ci et des seconds moyens (9) d'analyse par détection de la présence de composantes de signal périodique dans les sorties des capteurs pour détecter la présence ou non de lumière artificielle dans l'environnement du véhicule et délivrer en conséquence un ordre d'allumage/extinction des feux du véhicule, et **en ce que** les premiers moyens (8) d'analyse sont associés à des troisièmes moyens (10) d'analyse différentielle des sorties des capteurs pour détecter un ciel sombre dans l'environnement du véhicule et délivrer une information de temporisation de l'allumage des feux du véhicule à la suite d'un ordre émanant des premiers moyens d'analyse.

2. Système selon la revendication 1, **caractérisé en ce que** le premier capteur (2) est dirigé vers la partie supérieure du véhicule et le second (3), vers la partie avant ou arrière de celui-ci.

3. Système selon la revendication 2, **caractérisé en ce que** les capteurs (2,3) sont disposés au-dessus de la planche de bord du véhicule.

4. Système selon la revendication 3, **caractérisé en ce que** les capteurs (2,3) sont associés au rétroviseur intérieur du véhicule.

5. Système selon l'une quelconque des revendications 2 à 4, **caractérisé en ce que** le premier capteur (2) dirigé vers la partie supérieure du véhicule présente un axe vertical et le second (3), dirigé vers l'avant ou l'arrière du véhicule, présente un axe faisant un angle compris entre environ 45° et environ 90° avec celui-ci.

6. Système selon l'une quelconque des revendications précédentes, **caractérisé en ce que** les capteurs (2,3) comprennent des photodiodes.

7. Système selon l'une quelconque des revendications précédentes, **caractérisé en ce que** les premiers moyens (8) d'analyse de niveau de lumière naturelle comprennent pour chaque capteur, des moyens de filtrage (45) et des moyens de comparaison à hystérésis (46) du signal filtré à un seuil prédéterminé, pour délivrer un signal indicatif du résultat de la comparaison, ce signal constituant l'ordre d'allumage/extinction des feux du véhicule en fonction du niveau de lumière naturelle.

8. Système selon la revendication 7, **caractérisé en ce que** les premiers moyens d'analyse (8) comprennent des moyens de comparaison (11) des ordres d'allumage/extinction émanant des deux capteurs pour n'autoriser l'allumage/extinction des feux du véhicule que si les deux ordres sont identiques.

9. Système selon l'une quelconque des revendications précédentes, **caractérisé en ce que** les seconds moyens (9) d'analyse de lumière artificielle comprennent pour chaque capteur, des moyens de découplage (47) de la composante de signal continu dans le signal de sortie de chaque capteur et des moyens (48) de mise en forme du signal de sortie de ces moyens de découplage.

10. Système selon la revendication 9, **caractérisé en ce que** les moyens de mise en forme (48) comprennent des moyens d'écrètage (49), des moyens de filtrage (50) et des moyens d'amplification de signal (51).

11. Système selon l'une quelconque des revendications précédentes, **caractérisé en ce que** les troisièmes moyens d'analyse (10) de ciel sombre comprennent des moyens d'amplification différentielle (52) recevant en entrée, les signaux de sortie des capteurs et des moyens de comparaison (53) de la sortie de ces moyens d'amplification différentielle à un seuil prédéterminé, pour délivrer ou non l'information de temporisation en fonction du résultat de cette comparaison.

12. Système selon l'une quelconque des revendications précédentes, **caractérisé en ce que** les moyens de traitement comprennent des moyens de mémorisation (M1,M2) de l'ordre d'allumage des feux du véhicule et de l'information de temporisation émanant des premiers et troisièmes moyens d'analyse respectivement.

13. Système selon l'une quelconque des revendications précédentes, **caractérisé en ce que** les moyens de traitement comprennent des moyens de temporisation (T2) de l'extinction des feux du véhicule à partir des ordres émanant des premiers et seconds moyens d'analyse.

14. Système selon l'une quelconque des revendications précédentes, **caractérisé en ce que** les moyens de commande (7) de l'allumage et de l'extinction des feux du véhicule comportent un organe commutateur à semi-conducteur (54) commandé par les moyens de traitement.

## Claims

1. A system for automatically turning on the lights of an automobile vehicle, the system including two or more sensors (2,3) of light in the environment of the vehicle offset angularly with respect to each other and means (6) for processing output signals of said sensors to control the operation of means (7) for turning the vehicle's lights on and off, which system is **characterised in that** the processing means (6) include first means (8) for analysing levels of DC signal components in the output signals of the sensors (2,3) to analyse the level of natural light in the environment of the vehicle and to deliver an instruction to turn the lights on or off as a function thereof and second analyser means (9) for detecting the presence of periodic signal components in the output signals of the sensors to sense the presence or absence of artificial light in the environment of the vehicle and consequently to deliver an instruction to turn vehicle's lights on or off, and **in that** the first analyser means (8) are associated with third analyser means (10) for differentially analysing the output signals of the sensors to sense a dark sky in the environment of the vehicle and to deliver information for delaying turning on the vehicle's lights in response to an instruction from the first analyser means.

2. A system according to claim 1, **characterised in that** the first sensor (2) is directed toward the upper part of the vehicle and the second sensor (3) is directed toward the front or rear part of the vehicle.

3. A system according to claim 2, **characterised in that** the sensors (2,3) are above the dashboard of the vehicle.

4. A system according to claim 3, **characterised in that** the sensors (2,3) are associated with an interior rear view mirror of the vehicle.

5. A system according to any of claims 2 to 4, **characterised in that** the first sensor (2) directed toward the upper part of the vehicle has a vertical axis and the second sensor (3) directed toward the front or the rear of the vehicle has an axis at an angle from approximately 45° to approximately 90° thereto.

6. A system according to any preceding claim, **characterised in that** the sensors (2,3) comprise photodiodes.

7. A system according to any preceding claim, **characterised in that** the first analyser means (8) for analysing the level of natural light comprise, for each sensor, filter means (45) and hysteresis comparator means (46) for comparing the filtered signal to a predetermined threshold to deliver a signal indicative of the result of the comparison, said signal constituting the instruction to turn the vehicle's lights on or off as a function of the level of natural light.

8. A system according to claim 7, **characterised in that** the first analyser means (8) comprise comparator means (11) for comparing instructions from the two sensors to authorise turning the vehicle's lights on or off only if the two instructions are identical.

9. A system according to any preceding claim, **characterised in that** the second analyser means (9) for analysing artificial light include, for each sensor, decoupling means (47) for decoupling the DC signal component in the output signal of each sensor and signal shaping means (48) for shaping the output signal of said decoupling means.

10. A system according to claim 9, **characterised in that** the signal shaping means (48) comprise peak limiter means (49), filter means (50), and signal amplifier means (51).

11. A system according to any preceding claim, **characterised in that** the third analyser means (10) for analysing a dark sky comprise differential amplifier means (52) receiving as input the output signals of the sensors and comparator means (53) for comparing the output of said differential amplifier means to a predetermined threshold and to deliver the time-delay indication or not as a function of the result of said comparison.

12. A system according to any preceding claim, **characterised in that** the processing means comprise memory means (M1,M2) for storing the instruction to turn on the vehicle's lights and the time-delay indication from the first and third analyser means, respectively.

13. A system according to any preceding claim, **characterised in that** the processing means comprise time-delay means (T2) for delaying turning off the vehicle's lights in response to instructions from the first and second analyser means.

14. A system according to any preceding claim, **characterised in that** the control means (7) for turning the vehicle's lights on or off include a semiconductor switching device (54) controlled by the processing means.

## Patentansprüche

1. System zum automatischen Einschalten der Leuchten eines Kraftfahrzeugs, umfassend mindestens zwei Lichtfühler (2,3) in der Umgebung des Fahrzeugs, die winkelmäßig gegeneinander versetzt sind, und Mittel (6) zur Verarbeitung der Ausgangssignale dieser Fühler zur Steuerung des Betriebs von Mitteln (7) zur Steuerung der Einschaltung und der Löschung der Leuchten des Fahrzeugs, **dadurch gekennzeichnet, daß** die Verarbeitungsmittel (6) erste Mittel (8) zur Analyse der Pegel der kontinuierlichen Signalkomponenten in den Ausgängen der Fühler (2, 3) umfassen, um den Pegel des natürlichen Lichts in der Umgebung des Fahrzeugs zu analysieren und einen Befehl zum Einschalten/Löschen der Leuchten in Abhängig von diesem zu liefern, sowie zweite Mittel (9) zur Analyse durch Erfassung des Vorhandenseins von periodischen Signalkomponenten in den Ausgängen der Fühler, um das Vorhandensein oder Nichtvorhandensein von Kunstlicht in der Umgebung des Fahrzeugs zu erfassen und entsprechend einen Befehl der Einschaltung/Löschung der Leuchten des Fahrzeugs zu liefern, und daß den ersten Analysemitteln (8) dritte Mittel (10) zur Differenzanalyse der Ausgänge der Fühler zugeordnet sind, um einen dunklen Himmel in der Umgebung des Fahrzeugs zu erfassen und eine Information zur Verzögerung der Einschaltung der Leuchten des Fahrzeugs auf einen von den ersten Analysemitteln ausgehenden Befehl hin zu liefern.

2. System nach Anspruch 1, **dadurch gekennzeichnet, daß** der erste Fühler (2) auf den oberen Teil des Fahrzeugs zu und der zweite (3) auf seinen vorderen oder hinteren Teil zu gerichtet ist.

3. System nach Anspruch 2, **dadurch gekennzeichnet, daß** die Fühler (2, 3) über dem Armaturenbrett des Fahrzeugs angeordnet sind.

4. System nach Anspruch 3, **dadurch gekennzeichnet, daß** die Fühler (2, 3) dem Innenrückspiegel des Fahrzeugs zugeordnet sind.

5. System nach einem der Ansprüche 2 bis 4, **dadurch gekennzeichnet, daß** der erste Fühler (2), der auf den oberen Teil des Fahrzeugs zu gerichtet ist, eine vertikale Achse aufweist und der zweite (3), der bezüglich des Fahrzeugs nach vorne oder hinten gerichtet ist, eine Achse aufweist, die mit dieser einen Winkel zwischen etwa 45° und etwa 90° bildet.

6. System nach einem der vorhergehenden Ansprüche, **dadurch gekennzeichnet, daß** die Fühler (2, 3) Photodioden umfassen.

7. System nach einem der vorhergehenden Ansprüche, **dadurch gekennzeichnet, daß** die ersten Mittel (8) zur Analyse des Pegels des natürlichen Lichts für jeden Fühler Filtermittel (45) und Mittel(46) mit Hysterese zum Vergleichen des gefilterten Signals mit einer vorbestimmten Schwelle aufweisen, um ein das Ergebnis des Vergleichs angebendes Signal zu liefern, wobei dieses Signal den Befehl zum Einschalten/Löschen der Leuchten des Fahrzeugs in Abhängigkeit von dem Pegel des natürlichen Lichts bildet.

8. System nach Anspruch 7, **dadurch gekennzeichnet, daß** die ersten Analysemittel (8) Mittel (11) zum Vergleichen der von den beiden Fühlern ausgehenden Einschalt/Lösch-Befehle umfassen, um die Einschaltung/Löschung der Leuchten des Fahrzeugs nur zuzulassen, wenn die beiden Befehle identisch sind.

9. System nach einem der vorhergehenden Ansprüche, **dadurch gekennzeichnet, daß** die zweiten Mittel (9) zur Analyse des künstlichen Lichts für jeden Fühler Mittel (47) zur Entkopplung der kontinuierlichen Signalkomponente in dem Ausgangssignal jedes Fühlers und Mittel (48) zur Formung des Ausgangssignals dieser Entkopplungsmittel umfassen.

10. System nach Anspruch 9, **dadurch gekennzeichnet, daß** die Formungsmittel (48) Mittel (49) zur Spitzenbegrenzung, Mittel (50) zur Filterung und Mittel (51) zur Verstärkung des Signals umfassen.

11. System nach einem der vorhergehenden Ansprüche, **dadurch gekennzeichnet, daß** die dritten Mittel (10) zur Analyse des dunklen Himmels Differenzverstärkungsmittel (52) umfassen, die am Eingang die Ausgangssignale der Fühler empfangen, und Mittel (53) zum Vergleichen des Ausgangs dieser Differenzverstärkungsmittel mit einer vorbestimmten Schwelle umfassen, um die Verzögerungsinformation in Abhängigkeit von dem Ergebnis dieses Vergleichs zu liefern oder nicht zu liefern.

12. System nach einem der vorhergehenden Ansprüche, **dadurch gekennzeichnet, daß** die Verarbeitungsmittel Mittel (M1, M2) zum Speichern des Befehls zur Einschaltung der Leuchten des Fahrzeugs und der Verzögerungsinformation umfassen, die von den ersten bzw. den dritten Analysemitteln ausgehen.

13. System nach einem der vorhergehenden Ansprüche, **dadurch gekennzeichnet, daß** die Verarbeitungsmittel Mittel (T2) zur Verzögerung der Löschung der Leuchten des Fahrzeugs ausgehend von den von den ersten und zweiten Analysemitteln ausgehenden Befehlen umfassen.

14. System nach einem der vorhergehenden Ansprüche, **dadurch gekennzeichnet, daß** die Mittel (7) zur Steuerung der Einschaltung und der Löschung der Leuchten des Fahrzeugs ein Halbleiter-Schaltorgan (54) umfassen, das durch die Verarbeitungsmittel gesteuert wird.
